# EUROPEAN PATENT APPLICATION

(11) **EP 4 624 610 A1**
(43) Date of publication of application: **01.10.2025**
(21) Application number: 23894632.1
(22) Date of filing: 22.11.2023
(51) Int. Cl.: C22C 38/00, H01F 1/147, C21D 8/12, C22C 38/04, C22C 38/60

(54) **GRAIN-ORIENTED ELECTRICAL STEEL SHEET HAVING EXCELLENT IRON LOSS CHARACTERISTICS**

(30) Priority: 22.11.2022 JP 2022186403
(71) Applicant: NIPPON STEEL CORPORATION, Chiyoda-ku Tokyo 100-8071 (JP)
(72) Inventor: IWAKI, Masataka, Tokyo 100-8071 (JP); TAKAHASHI, Masaru, Tokyo 100-8071 (JP); MOGI, Hisashi, Tokyo 100-8071 (JP); WADA, Naoki, Tokyo 100-8071 (JP); HAMAMURA, Hideyuki, Tokyo 100-8071 (JP)
(74) Representative: Vossius & Partner Patentanwälte Rechtsanwälte mbB
(86) International application number: PCT/JP2023/042005
(87) International publication number: WO 2024/111628

(57) **Abstract**

Grain-oriented electrical steel sheet refined in magnetic domains by controlling a shape of grooves and positions of strained parts and the resultant stress to within certain ranges so as to further reduce the core loss, i.e., grain-oriented electrical steel sheet having a steel sheet surface on which grooves extending in a direction crossing a rolling direction (RD direction) and with a groove depth direction comprised of a sheet thickness direction (ND direction) are formed and having residual stress due to strain remaining in the vicinities of the grooves, in which grain-oriented electrical steel sheet, a pitch in the steel sheet rolling direction (RD direction) of the grooves is 2 to 10 mm, a depth of the grooves is 10 µm or more and 40 µm or less and a width of the grooves is 10 µm or more and 200 µm or less, in a range of within 10 µm from a wall surface of the groove (surface of the groove present at a depth of 25 to 75% of the depth of the groove) to the RD direction, a region in which 10 MPa or more residual stress is present due to compressive strain in the RD direction is 10 area% or more. in a range of within 10 µm from a bottom surface of the groove (surface of the groove present at a depth of 75 to 100% of the depth of the groove) to the ND direction, a region in which 10 MPa or more residual stress is present due to tensile strain in the RD direction is 10 area% or more.

## Description

### FIELD

The present invention relates to grain-oriented electrical steel sheet, in particular grain-oriented electrical steel sheet with excellent low core loss property.

### BACKGROUND

Grain-oriented electrical steel sheet is being used as magnetic cores in numerous electrical equipment. Grain-oriented electrical steel sheet is containing Si in about 1.0% to 5.0% and having a crystal orientation of the product highly controlled to the {110}<001> orientation. Grain-oriented electrical steel sheet is excellent in magnetic properties and, for example, is utilized as the core material of transformers and other stationary inductors. For that purpose, as magnetic properties, a high magnetic flux density as represented by the B₈ value and a low core loss as represented by W_{17/50} are in demand.

Various technical development efforts have been done under way for improving the magnetic properties of such grain-oriented electrical steel sheet. In particular, along with the recent demand for energy savings, further lower core loss is being sought from grain-oriented electrical steel sheet. For reducing the core loss of grain-oriented electrical steel sheet, it is effective to raise the integration degree of the orientation of the crystal grains of steel sheet to the Goss orientation to improve the magnetic flux density and decrease the hysteresis loss.

In grain-oriented electrical steel sheet used as a base material for a wound transformer, in particular further lower core loss is being sought. For reducing the core loss, in electrical steel sheet, magnetic domain refining is being applied, but in a wound transformer, stress relief annealing is done in the production process, so if applying magnetic domain refining, art for a heatproof type of magnetic domain refining would be necessary.

As a technique for a heatproof type of magnetic domain refining, there is the technique of forming regular grooves on the steel sheet and the technique of introducing strain after finish annealing. Suitably combining these is also being studied. For example, PTL 1 discloses that with strain, a sufficient core loss reduction effect cannot be obtained and that conversely the strained parts grow in crystal grains at the time of stress relief annealing and the core loss deteriorates, so only grooves are formed and strained parts are not allowed to remain present.

PTL 2 discloses the strained parts grow in crystal grain size whereby the magnetic flux density sometimes falls, so as much as possible no strain should be imposed and only specific shapes of grooves should be formed.

PTL 3 discloses to experimentally confirm that by introducing to steel sheet formed with grooves under certain conditions by introducing slight rolling strain, it is possible to lower the core loss and to use projection rolls as straining means at a surface pressure of 70 kg/mm² or less. It should be noted that it is disclosed that if the surface pressure is more than 70 kg/mm², the amount of strain becomes too great and the hysteresis loss deteriorates.

### [CITATIONS LIST]

### [PATENT LITERATURE]

[PTL 1] Japanese Unexamined Patent Publication No. 63-76819
[PTL 2] Japanese Unexamined Patent Publication No. 6-158166
[PTL 3] Japanese Unexamined Patent Publication No. 7-258739

### SUMMARY

### [TECHNICAL PROBLEM]

The grain-oriented electrical steel sheet used as the base material for wound transformers is being required to be made further lower in core loss. Heatproof type magnetic domain refining is generally being applied for forming linear shaped grooves or for introducing strain so that 180° domain widths are divided and along with this eddy current loss constituting part of the core loss is reduced. However, there is demand for further lower core loss.

The present invention was made considering the above technical problem. It has as its object magnetic domain refining by controlling the shape of the grooves and positions of introduction of strain and the resultant residual stress to within certain ranges so as to further reduce the core loss of the obtained grain-oriented electrical steel sheet.

### [SOLUTION to PROBLEM]

The inventors discovered that by introducing both grooves and strain to steel sheet and further introducing both with specific grooves shapes and amounts of strain (residual stress) in range at substantially the same positions of steel sheet, it is possible to realize further lower core loss.

While not desirable to be bound to any specific theory, the mechanism by which formation of both grooves and strain cause core loss reduce is believed to be as follows: First, due to the grooves, the domain width is refined. Along with this, the eddy current loss, constituting part of the core loss, is reduced. In addition, the strain introduced in the vicinities of the grooves (substantially the same positions as the grooves) causes the magnetic anisotropy at the grooves and strained parts to change. As a result, it is believed possible to raise the magnetic domain refining effect of the grooves.

The gist of the present invention is grain-oriented electrical steel sheet having a steel sheet surface on which grooves extending in a direction crossing a rolling direction (RD direction) and with a groove depth direction comprised of the sheet thickness direction (ND direction) are formed and having residual stress due to strain remaining in the vicinities of the grooves, in which grain-oriented electrical steel sheet, the grooves and the residual stress due to the strain satisfying the following conditions:
a. A pitch in the steel sheet rolling direction (RD direction) of the grooves formed is 2 to 10 mm.
b. A depth of the grooves formed is 10 µm or more and 40 µm or less and a width of the grooves is 10 µm or more and 200 µm or less.
c. In a range of within 10 µm from a wall surface of a groove formed (surface of groove present at depth of 25 to 75% of depth of groove defined as "wall surface") to the steel sheet rolling direction (RD direction), a region in which 10 MPa or more residual stress is present due to compressive strain in the steel sheet rolling direction (RD direction) is 10 area% or more.
d. In a range of within 10 µm from a bottom surface of a groove formed (surface of groove present at depth of 75 to 100% of depth of groove defined as "bottom surface") to the sheet thickness direction (ND direction), a region in which 10 MPa or more residual stress is present due to tensile strain in the steel sheet rolling direction (RD direction) is 10 area% or more.

### [ADVANTAGEOUS EFFECTS OF INVENTION]

According to the present invention, due to the strain introduced at the vicinities of the grooves (positions substantially the same as the grooves), the magnetic anisotropy changes at the grooves and strained parts and the magnetic domain refining effect by the grooves can be enhanced and therefore the core loss is reduced.

### BRIEF DESCRIPTION OF DRAWINGS

FIG. 1 is a cross-sectional view of a groove part (cross-sectional view vertical to groove extension direction) of grain-oriented electrical steel sheet according to one embodiment of the present invention.
FIG. 2 is a schematic view of the shape relating to a lasered part of steel sheet lasered for obtaining a groove part and strained part according to one embodiment of the present invention.

### DESCRIPTION OF EMBODIMENTS

Below, preferred embodiments of the present invention will be explained in detail. It should be noted that, unless particularly indicated otherwise, for numerical values A and B, the expression "A to B" shall mean "A or more and B or less." In such expressions, when only the numerical value B is given a unit, that unit shall also be deemed to apply to the numerical value A.

### [Steel Sheet of Grain-Oriented Electrical Steel Sheet]

First, the grain-oriented electrical steel sheet according to the present embodiment is not particularly limited. Grain-oriented electrical steel sheet comprised of known steel constituents can be used. Such steel sheet able to be used for the grain-oriented electrical steel sheet according to the present invention will be explained illustratively below:

### [Chemical Composition of Steel Sheet]

A typical chemical composition of steel sheet will be explained below. It should be noted that, below, unless particularly indicated otherwise, the expression of "%" shall indicate "mass%."

The constituents of the steel sheet used for the grain-oriented electrical steel sheet according to the present invention are preferably comprised for controlling the sheet to a texture in which the crystal orientation is integrated to the {110}<001>orientation (Goss orientation) and contains at least Si: 1.0 to 5.0% and Mn: 0.01 to 0.15%.

### (Si: 1.0 to 5.0%)

The content of Si (silicon) is 1.0 to 5.0%. Si raises the electrical resistance of steel sheet and thereby reduces the eddy current loss - one of the causes of core loss. If the content of Si is less than 1.0%, it becomes difficult to sufficiently suppress the eddy current loss of the final grain-oriented electrical steel sheet. If the content of Si is more than 5.0%, the workability of cold rolling reduction of the steel sheet particularly falls, so this is not preferable. Therefore, the content of Si is 1.0 to 5.0%, preferably is 2.5 to 4.5%, more preferably 2.7 to 4.0%.

### (Mn: 0.01 to 0.15%)

The content of Mn (manganese) is 0.01 to 0.15%. Mn forms MnS and MnSe etc. as the inhibitors affecting the secondary recrystallization. If the content of Mn is less than 0.01%, the absolute amounts of MnS and MnSe for causing secondary recrystallization are not reached, so this is not preferable. If the content of Mn is more than 0.15%, at the time of slab heating, dissolution of Mn becomes difficult, so this is not preferable. Further, if the content of Mn is more than 0.15%, the precipitated sizes of the inhibitors MnS and MnSe easily become coarser and the optimal size distributions as inhibitors are impaired, so this is not preferable. Therefore, the content of Mn is 0.01 to 0.15%, preferably is 0.03 to 0.13%.

The constituents other than Si and Mn can be the constituents contained in ordinary grain-oriented electrical steel sheet.

For example, as constituents other than Si and Mn, by mass%, C: 0.085% or less, acid soluble Al: 0.065% or less, N: 0.012% or less, Cr: 0.30% or less, Cu: 0.40% or less, P: 0.50% or less, Sn: 0.30% or less, Sb: 0.30% or less, Ni: 1.000% or less, and S: 0.0150% or less may be included. Further, as other inhibitor forming elements, B, Bi, Se, Pb, Sn, Ti, etc. can also be added. The amounts added may be suitably adjusted. The upper limit of the B content may be 0.080%, the upper limit of the Bi content may be 0.010%, the upper limit of the Se content may be 0.035%, the upper limit of the Pb content may be 0.10%, the upper limit of the Sn content may be 0.10%, and the upper limit of the Ti content may be 0.015%. These optional elements may be included in accordance with known objectives, therefore there is no need to establish lower limit values of the contents of the optional elements. For example, the lower limit values may also be 0%.

The balance besides the above constituents of the steel sheet is comprised of Fe and impurities. In this case, "impurity" elements indicate constituents included in the raw materials or constituents entering in the process of production and allowed in a range not substantially impacting the present embodiment.

The chemical composition of steel sheet can be analyzed using ICP-AES (inductively coupled plasma-atomic emission spectrometry). Specifically, a 35 mm square specimen taken from the steel sheet is analyzed by an ICPS-8100 made by Shimadzu etc. (measurement device) under conditions based on a calibration curve prepared in advance, so as to identify the chemical composition. It should be noted that the C and S can be analyzed using the combustion-infrared absorption method while the N can be analyzed using the inert gas melting-thermal conductivity method.

### [Grooves]

For magnetic domain refining, the steel sheet surface is formed with grooves extending in a direction crossing the rolling direction (RD direction) and with a groove depth direction comprised of the sheet thickness direction (ND direction). It should be noted that the grooves need only be provided so as to cross the rolling direction. The direction of extension of the grooves and the rolling direction need not necessarily be orthogonal, but the grooves may be provided in a direction forming a 0 to 30° angle with the direction perpendicular to rolling. Further, the grooves need not necessarily have straight line shapes when viewed from the sheet thickness direction (when viewing grooves planarly) and may also have bow shapes. The shapes of the grooves explained below are determined by removing from the final product at least the glass coating and insulating coating of the groove inside parts by pickling etc.

The above grooves are formed on the steel sheet surface at a 2 to 20 mm pitch (interval distance) in the steel sheet rolling direction (RD direction). If the pitch of the grooves is less than 2 mm, the effect of magnetic domain refining becomes saturated and the effect of reduction of the eddy current loss becomes harder to obtain. This is therefore not preferable. If the pitch of the grooves is more than 20 mm, the effect of magnetic domain refining decreases, so the effect of improvement of the core loss becomes insufficient. This is therefore not preferable. The pitch of the grooves is 2 to 10 mm.

It should be noted that the pitch in the rolling direction may be measured by, for example, the following method. First, the set of any two grooves adjoining each other in the planar view is examined. Next, the distance between center points in the width directions of these grooves is measured at several locations in the rolling direction. The average value of these may be made the pitch in the rolling direction of that set of grooves.

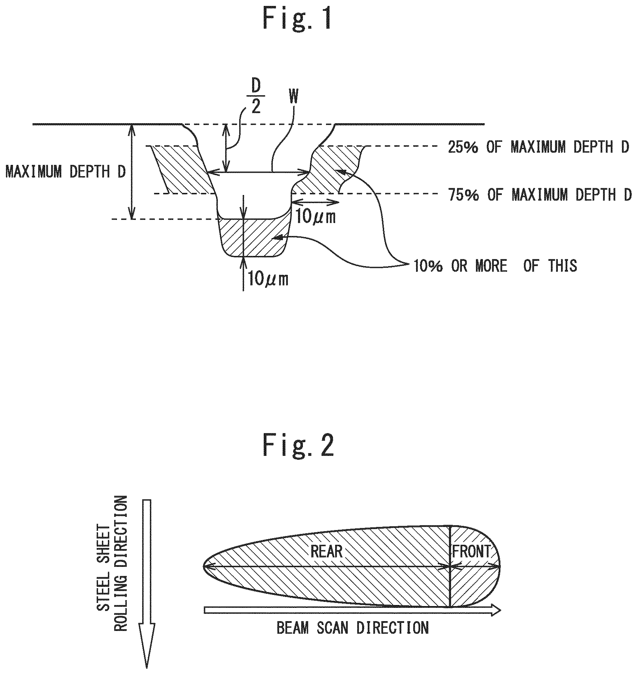

FIG. 1 is a cross-sectional view of a groove part according to one embodiment of the present invention (cross-sectional view vertical to direction of extension of groove). In this view, the groove part is shaped close to a trapezoid, but the groove shape may also be bow shaped. In one embodiment of the electrical steel sheet of the present invention, the depth D of the groove part is 10 µm to 40 µm in range in the sheet thickness direction (ND direction). If the depth D is less than 10 µm, the amount of formation of magnetic poles from the groove wall surfaces becomes smaller, the domains are not refined, and a sufficient effect of reduction of core loss is not obtained. If the depth D is more than 40 µm, the domains are refined, but the drop in magnetic flux density due to the formation of the grooves becomes greater and a sufficient core loss reduction effect cannot be obtained. The preferable depth is 15 µm to 30 µm.

### (Measurement of Depth D of Grooves)

The method of measurement of the "depth D" according to the present invention is as follows:
Any groove is selected. The maximum depth at the cross section of any point of the groove (surface vertical to direction of extension of groove) is defined as the depth D of the groove and is measured using a laser microscope (3D laser microscope using confocal optical system using pinhole). The depth is measured in the normal direction of the steel sheet surface (assuming inside direction of steel sheet to be positive) using the height of the steel sheet surface adjoining an edge of the groove as 0.

The "width W of the grooves" referred to in the present invention means the width of the grooves at the depth of half of the groove depth D (D/2). The width W of the grooves is 10 µm to 200 µm in range. If the width W is less than 10 µm, the magnetic flux leaking from a wall surface of a groove enters the wall surface of the groove at the opposite side, but the formation of magnetic poles becomes smaller, the domains are not refined, and a sufficient effect of reduction of core loss is not obtained. If the width W is more than 200 µm, the effect of reduction of core loss becomes saturated, the laser power required for forming the grooves becomes greater, and the production costs just swell. The preferable width W is 30 to 100 µm.

### (Measurement of Width W of Grooves)

The method of measurement of the "width W of the grooves" according to the present invention is as follows:
Any groove of the electrical steel sheet is selected. Between the widths of the groove where the groove depths D of the cross sections of any point (A) of the groove and the point (B) 3 mm apart from that in the longitudinal direction of the groove (cross sections vertical to the direction of extension of the groove) become half (D/2), the broader one is measured as "w" and the narrower one as "w'" using a laser microscope (3D laser microscope using confocal optical system using pinhole). The groove width W is the average value of these values.

### [Strain]

According to the present embodiment, the steel sheet surface is formed with grooves for magnetic domain refining. To heighten the effect of this magnetic domain refining, strain is introduced in the vicinities of the grooves (substantially same positions as the grooves). Due to the residual stress introduced in the vicinities of the grooves (substantially same positions as the grooves), the magnetic anisotropy of the grooves and strained parts changes. As a result, the magnetic domain refining effect due to the grooves can be heightened.

At the cross section vertical to the direction of extension of the grooves, in the range within 10 µm from the wall surfaces of the groove (surface of groove present at depth of 25 to 75% of depth D of groove defined as "wall surface") in the rolling direction (RD direction), there is a region of 10 area% or more present with a 10 MPa or more residual stress due to compressive strain in the rolling direction (RD direction). According to the method of forming grooves explained later, at the time of forming the grooves, it is possible to introduce compressive strain to the vicinities of the wall surfaces. There is residual stress present due to this compressive strain. In the range more than 10 µm in the rolling direction from the wall surfaces, the effect of the residual stress due to strain on the grooves is small and it is not possible to sufficiently raise the magnetic domain refining effect by the grooves. If the residual stress due to strain is less than 10 MPa, the residual stress due to strain is small and the magnetic domain refining effect by the grooves cannot be sufficiently raised. The upper limit of the residual stress is not particularly limited. The substantial upper limit is the yield strength of the material, but if too large, conversely the core loss and other magnetic properties deteriorate, so overall it may be 30 MPa or less. Further, excessive residual stress is liable to impact the magnetic properties, so the upper limit of the residual stress may be prescribed. Overall, it may be 20 MPa or less. Further, if the region in which 10 MPa or more residual stress is present is less than 10 area%, the magnetic domain refining effect cannot be sufficiently obtained. The upper limit of the area% of that region is not particularly prescribed and may be 100 area% as well. However, the magnetic domain refining effect becomes slightly saturated. Further, if the residual stress is large and the area% is large, the core loss lowering effect due to the magnetic domain refining effect and the effect of deterioration of the core loss due to stress as explained above cancel each other out and sometimes the core loss and other magnetic properties deteriorate. The upper limit of the area% of that region may also be adjusted. Overall, it may be 50 area% or less. Further, the upper limit of the area% of that region may also be adjusted in accordance with the desired magnetic properties. It may be 30 area% or less and may be 20 area% or less.

At the cross section vertical to the direction of extension of the grooves, in the range within 10 µm from the bottom surface of the groove (surface of groove present at depth of 75 to 100% of depth D of groove defined as "bottom surface") in the sheet thickness direction (ND direction), there is a region of 10 area% or more present with a 10 MPa or more residual stress due to tensile strain in the rolling direction (RD direction). According to the method of forming grooves explained later, at the time of forming the grooves, it is possible to introduce tensile strain to the vicinity of the bottom surface. There is stress present due to this tensile strain. In the range more than 10 µm in the sheet thickness direction from the bottom surface, the effect of the residual stress due to strain on the grooves is small and it is not possible to sufficiently raise the magnetic domain refining effect by the grooves. If the residual stress due to strain is less than 10 MPa, the residual stress due to strain is small and the magnetic domain refining effect by the grooves cannot be sufficiently raised. The upper limit of the residual stress is not particularly limited. The substantial upper limit is the yield strength of the material, but if too large, conversely the core loss and other magnetic properties deteriorate, so overall it may be 30 MPa or less. Further, excessive residual stress is liable to impact the magnetic properties, so the upper limit of the residual stress may be prescribed. Overall, it may be 20 MPa or less. Further, if the region in which 10 MPa or more residual stress is present is less than 10 area%, the magnetic domain refining effect cannot be sufficiently obtained. The upper limit of the area% of that region is not particularly prescribed and may be 100 area% as well. However, the magnetic domain refining effect becomes slightly saturated. Further, if the residual stress is large and the area% is large, the core loss lowering effect due to the magnetic domain refining effect and the effect of deterioration of the core loss due to stress as explained above cancel each other out and sometimes the core loss and other magnetic properties deteriorate. The upper limit of the area% of that region may also be adjusted. Overall, it may be 50 area% or less. Further, the upper limit of the area% of that region may also be adjusted in accordance with the desired magnetic properties. It may be 30 area% or less and may be 20 area% or less.

### (Measurement of Residual Stress Due to Strain)

The residual stress due to strain is measured by EBSD. At that time, it is desirable to conduct the measurement without removing the glass coating and insulating coating.

Mapping of residual stress is conducted by electron backscatter diffraction (EBSD) using as the measurement region a region of the total thickness in the sheet thickness direction and a width of two times the emitted width of the energy beam (rolling direction) centered about the emitted position of the energy beam in the cross section in the sheet thickness direction vertical to the scanning direction of the energy beam (in grain-oriented electrical steel sheet, an energy beam is generally emitted while scanning the sheet width direction, in that case, cross section in the sheet thickness direction vertical to sheet thickness direction). At the time of map measurement, an electron beam is emitted in 2 µm or less steps at a specimen with an observed surface (steel sheet surface) tilted 70 degrees with respect to the emission direction of the electron beam (tilt angle is made 0 degree in case where direction of emission of electron beam and cross section of steel sheet are vertical) to obtain an EBSD image. The obtained image is stored as 956×956 pixels. The strain is calculated using Cross Court 4 of BLG Vantage to calculate the strength of the strain.

As the method for derivation of the area%, the formulas (Area of region with compressive strain of 10 MPa or more/(groove depth (25 to 75% depth)×10 µm)×100 (Area of region with tensile strain of 10 MPa or more)/(groove width (width at 75% or less depth)×10 µm)×100 were used. FIG. 1 schematically shows the range of within 10 µm from side surface or bottom surface of a groove.

Regarding the calculation of the area%, the surface for map measurement is made the surface including a point between the point of start of formation of a groove by laser and the point of end of the same.

### [Method of Production of Grain-Oriented Electrical Steel Sheet]

The process of production of the grain-oriented electrical steel sheet of the present invention will be explained illustratively below. It should be noted that the method of production of the grain-oriented electrical steel sheet according to the present embodiment is just one example and may be changed in any way to an extent not impeding the effect of the present embodiment.

### (Casting Step S1)

In the casting step S1, a slab is prepared. One example of the method of production of a slab is as follows: First, molten steel is produced (smelted). Next, the molten steel is used to produce a slab. The method of production of the slab is not particularly limited, but, for example, continuous casting may be used for producing the slab. Molten steel may also be used to produce an ingot and the ingot bloomed to produce a slab. The thickness of the slab is not particularly limited. The thickness of the slab may, for example, also be 150 mm to 350 mm. The thickness of the slab is preferably 220 mm to 280 mm. As the slab, a thickness 10 mm to 70 mm so-called "thin slab" may be used. If using a thin slab, at the hot rolling step S2, the rough rolling before the finish rolling may be omitted.

The chemical composition of the slab need only be a chemical composition giving rise to secondary recrystallization. The basic composition and operational elements of the slab specifically explained become as follows: It should be noted that the indications of "%" used for the constituents mean "mass%."

Si is an important element in raising the electrical resistance and lowering the core loss. If the content is more than 5.0%, at the time of cold rolling, the material easily cracks and rolling becomes impossible. On the other hand, if lowering the amount of Si, at the time of finish annealing, α→γ transformation occurs and the orientation of the crystals becomes impaired, so 1.0% not affecting the orientation of the crystals in the finish annealing may be made the lower limit. Therefore, the Si content may be 1.0 to 5.0%

Mn and S precipitate as MnS which acts as an inhibitor. If the Mn content is less than 0.01% or the S content is less than 0.005%, there is a possibility that a predetermined amount of effective MnS inhibitor cannot be secured. Further, if the Mn content is more than 0.15% and the S content is more than 0.015%, there is a possibility that dissolution at the time of slab heating becomes insufficient and the secondary recrystallization no longer stably occurs. For this reason, the Mn content may be 0.01 to 0.15% and the S content may be 0.005 to 0.015%.

C is an element effective for control of the primary recrystallized structure in the production process, but has a possibility of detrimentally affecting the magnetic properties if the content in the final product is excessive. Therefore, the C content may also be made 0.085% or less. The preferable upper limit of the C content is 0.080%. C is removed at the later explained decarburization annealing step S5 and the final annealing step S8 and may become 0.005% or less after the final annealing step S8. If the slab contains C, if considering the productivity at the time of industrial production, the lower limit of the C content may be more than 0% and may be 0.001%.

Acid soluble Al is an element bonding with N to form AlN or (Al,Si)N and functioning as an inhibitor in that state. The content of the acid soluble Al may be made 0.012% to 0.065% by which the magnetic flux density becomes higher.

N is an element by which, when added in 0.012% or more at the time of steelmaking, forms cavities in the steel sheet called "blisters," so the upper limit of the N content may be 0.012%. N can be included by nitriding in the middle of the production process, so the lower limit is not particularly prescribed and may also be 0%. However, the detection limit of N is 0.0001%, so the substantive lower limit is 0.0001%.

The slab can have added to it B, Bi, Se, Pb, Sn, Ti, etc. as other inhibitor forming elements. The amounts added may be suitably adjusted. The upper limit of the B content may be 0.080%, the upper limit of the Bi content may be 0.010%, the upper limit of the Se content may be 0.035%, the upper limit of the Pb content may be 0.10%, the upper limit of the Sn content may be 0.10%, and the upper limit of the Ti content may be 0.015%. These optional elements may be included in accordance with known objectives, therefore there is no need to establish lower limit values of the contents of the optional elements. For example, the lower limit values may also be 0%.

The balance of the chemical composition of the slab is comprised of Fe and impurities. It should be noted that the "impurities" referred to there are constituents entering the slab due to the ore, scrap, or other raw materials and other various factors in the production process when industrially producing the slab and which are allowed to an extent not substantially having an effect on the grain-oriented electrical steel sheet according to the present invention.

Considering the strengthening of the inhibitor function by formation of compounds and the effect on the magnetic properties, any known element may be included (added) in place of part of the Fe. As the any element to be included in the slab in place of part of the Fe, for example, Cu, P, Sb, Sn, Cr, Ni, etc. may be mentioned. One or more of any of these may be added to the slab. The upper limit value of the Cu content may be 0.3%, the upper limit value of the P content may be 0.5%, the upper limit value of the Sb content may be 0.3%, the upper limit value of the Sn content may be 0.3%, the upper limit value of the Cr content may be 0.30%, and the upper limit value of the Ni content may be 1.0%. These optional elements may be included in accordance with known objectives, therefore there is no need to establish lower limit values of the contents of the optional elements. For example, the lower limit values may also be 0%.

The chemical composition of the slab can be analyzed using ICP-AES (inductively coupled plasma-atomic emission spectrometry). Specifically, a 35 mm square test piece taken from the slab is analyzed by an ICPS-8100 made by Shimadzu etc. (measurement device) under conditions based on a calibration curve prepared in advance, so as to identify the chemical composition. It should be noted that the C and S can be measured using the combustion-infrared absorption method while the N can be measured using the inert gas fusion-thermal conductivity method.

### (Hot Rolling Step S2)

The hot rolling step S2 is a step of hot rolling a slab heated up to a predetermined heating temperature (for example, 1100°C to 1400°C) to obtain hot rolled steel sheet. The heating temperature at the time of hot rolling may, for example, be 1 100°C or more from the viewpoint of securing the temperature at the time of hot rolling and further may be 1280°C or less from the viewpoint of not causing complete dissolution of the inhibitor constituent AlN. It should be noted that in the case of making AlN and MnS the main inhibitors, the heating temperature at the time of hot rolling may be made the 1300°C or more where these inhibitor constituents completely dissolve.

### (Hot Rolled Steel Sheet Annealing Step S3)

The hot rolled steel sheet annealing step S3 is a step for annealing the hot rolled steel sheet obtained at the hot rolling step S2 immediately or in a short time to obtain annealed steel sheet. The annealing may be done in temperature region from 750°C to 1200°C for 30 seconds to 30 minutes. The annealing is effective for raising the magnetic properties of the product.

### (Cold Rolling Step S4)

The cold rolling step S4 is a step for cold rolling one time the annealed steel sheet obtained at the hot rolled steel sheet annealing step S3 or cold rolling it several times (two times or more) interspaced with annealing (process annealing) (for example, for a total cold rolling rate of 80% to 95%) to obtain cold rolled steel sheet. The thickness of the cold rolled steel sheet may for example be 0.10 mm to 0.50 mm.

### (Decarburization Annealing Step S5)

The decarburization annealing step S5 is a step for annealing the cold rolled steel sheet obtained at the cold rolling step S4 for decarburization and for obtaining a decarburized annealed steel sheet with primary recrystallization (cold rolled steel sheet subjected to decarburization annealing step). The decarburization annealing may be done at for example 700°C to 900°C for 1 minute to 3 minutes.

By annealing the cold rolled steel sheet for decarburization, the C constituent contained in the cold rolled steel sheet is removed. For removing the C constituent contained in the cold rolled steel sheet, the decarburization annealing is preferably done in a wet atmosphere.

### (Nitriding Step S6)

The nitriding step S6 is a step performed in accordance with need for adjusting the strength of an inhibitor in secondary recrystallization. Nitriding is treatment for making the content of nitrogen of cold rolled sheet increase to 40 ppm to 200 ppm or so from the start of the decarburization annealing step to the start of the secondary recrystallization in the finish annealing step. As the nitriding, for example, treatment for annealing the decarburized annealed steel sheet in an atmosphere containing ammonia or other nitriding gas, treatment for coating an annealing separator containing powder of MnN etc. having a nitriding ability on the decarburized annealed steel sheet at the later explained annealing separator coating step S7, etc. may be mentioned.

### (Annealing Separator Coating Step S7)

The annealing separator coating step S7 is a step of coating the decarburized annealed steel sheet with an annealing separator. As the annealing separator, for example, an annealing separator having alumina (Al₂ O₃ ) as its main constituent can be used. The decarburized annealed steel sheet after coating by the annealing separator is wound up into a coil and in that state is finish annealed at the next finish annealing step S8.

It should be noted that, if forming a glass coating containing Mg₂ SiO₄, an annealing separator having magnesia (MgO) as its main constituent is used.

### (Finish Annealing Step S8)

The finish annealing step S8 is a step of finish annealing the decarburized annealed steel sheet on which the annealing separator was coated so as to cause secondary recrystallization. This finish annealing step S8 accompanied with secondary recrystallization causes progression of secondary recrystallization in a state suppressing growth of primary recrystallized grains by an inhibitor so as to make the {110}<001>oriented grains preferentially grow and cause the magnetic flux density to be strikingly improved.

It should be noted that, in the above-mentioned annealing separator coating step S7, if coating magnesia (MgO), a glass coating containing Mg₂ SiO₄ is formed by this finish annealing step S8. It should further be noted that, in this embodiment, such a glass coating is also deemed included in the base steel sheet (later explained finish annealed steel sheet). Therefore, for example, if the finish annealed steel sheet is formed with a glass coating, the "surface of the finish annealed steel sheet" is deemed to mean the surface of the glass coating. By forming the glass coating, the properties of the finally obtained grain-oriented electrical steel sheet can be expected to be further enhanced.

### (Groove Forming Step S9)

The groove forming step S9 is a step for forming grooves on the steel sheet for the purpose of magnetic domain control (magnetic domain refining). The grooves can be formed by laser, electron beam, plasma, mechanical method, etching, or other known technique. At the groove forming step, it is also possible to form strained parts in the vicinities of the grooves.

In the flow explained above, the groove forming step S9 is performed after the finish annealing step S8. However, the groove forming step S9 may also be performed at the steel sheet after the cold rolling step S4 (i.e., the cold rolled steel sheet). In this case as well, it is possible to maintain the ideal cross-sectional shape of the linear groove G by magnetic domain refining. Therefore, the time at which the groove forming step S9 is performed may be before or after the finish annealing step S8. However, if performing the later explained insulating coating imparting step S10, it is necessary to perform the groove forming step S9 before that step S10.

If forming the grooves using a laser, according to the example of the lasering conditions below, it is possible to obtain the electrical steel sheet according to the present embodiment, i.e., the electrical steel sheet having residual stress present due to the predetermined grooves and vicinities of the same.

In the lasering step, the surface of the steel sheet (only one surface) is lasered to form on the steel sheet a plurality of grooves extending in a direction crossing the rolling direction at a 2 to 20 mm range of desired pitch along the rolling direction.

In the lasering step, the lasering apparatus emits a laser beam toward the surface of the steel sheet by driving rotation of a polygon mirror and makes the laser beam scan a direction forming a 0 to 30° angle with the direction perpendicular to rolling.

At the same time as the lasering, air or an inert gas or other assist gas is blown at the portion of the steel sheet which is lasered. The inert gas is, for example, nitrogen, argon, etc. The assist gas acts to remove the constituents melted or vaporized from the steel sheet due to lasering. By blowing the assist gas, the laser beam reaches the steel sheet without being obstructed by the melted or vaporized constituents, so the grooves are stably formed.

As the laser source, for example, a fiber laser, YAG laser, semiconductor laser, or CO₂ laser or other high output laser generally used for industrial purposes can be used. Further, so long as it is possible to stably form the grooves and strained parts in the vicinities of the same, a pulse laser or continuous wave laser may also be used as the laser source. As the laser, a single mode laser high in focusing ability is generally used for formation of grooves, but use of a multimode laser at which the power peaks are suitably dispersed so that the desired strained parts are obtained in the vicinities of the grooves is preferable in the present embodiment.

As the lasering conditions, for example, it is preferable to set the laser output to 200W to 3000W and change the beam shape of the laser at the time of forming the grooves to a teardrop shape. FIG. 2 schematically shows an example of the shape relating to the lasered part. As shown in FIG. 2, by making the front part of the beam in the direction of progression (scan direction) a semicircular shape so that the focusing ability becomes higher, it is easy to form grooves having the desired widths and depths. By making the rear part of the beam in the direction of progression (scan direction) a semielliptical shape with a long axis five times or more longer than the short axis, it is easy to form strained parts having the desired residual stress in the vicinities of the grooves formed. It should be noted that the "front" and "rear" of the beam are based on the part of the steel sheet in the rolling direction (RD direction) where the beam size becomes the maximum (boundary). The side in the advancing direction of the beam is defined as the "front" and the opposite side direction is defined as the "rear." In other words, the ratio of the long axis of the semiellipse at the rear part to the size of the semicircle at the front part may be 5 or more.

The focused spot size of the portion where the beam size in the steel sheet rolling direction becomes the maximum may be set to 10 µm to 200 µm, the focused spot size in the sheet width direction (or direction of advance of beam) may be set to 30 µm to 1000 µm, and the beam scan speed may be set to 5 m/s to 50 m/s. These lasering conditions are suitably adjusted so that the desired grooves and strained parts in their vicinities (residual stress) are obtained.

### (Insulating Coating Forming Step S10)

The insulating coating forming step S10 is a step of coating a groove forming surface of finish annealed steel sheet with a coating solution and baking it on so as to form an insulating coating on the groove forming surface. By forming an insulating coating, the properties of the finally obtained grain-oriented electrical steel sheet can be expected to be further improved. Further, by selecting a type of coating having an ability to impart tension as the insulating coating, the properties can be expected to be further improved.

In this case, as the coating solution, one containing for example phosphoric acid, a phosphate, chromic anhydride, a chromate, alumina, or a silica compound is preferably used. The baking may for example be performed under conditions of 350°C to 1150°C for 5 seconds to 300 seconds.

### EXAMPLES

Below, examples will be shown while explaining the grain-oriented electrical steel sheet of the present invention more specifically. It should be noted that the examples shown below are just illustrations of the grain-oriented electrical steel sheet according to the embodiments. The grain-oriented electrical steel sheet according to the embodiments is not limited to the examples shown below.

A slab prepared to give grain-oriented electrical steel sheet having a chemical composition containing, by mass%, Si: 3.0%, C: 0.080%, acid soluble Al: 0.028%, N: 0.010%, Mn: 0.12%, Cr: 0.05%, Cu: 0.04%, P: 0.01%, Sn: 0.02%, Sb: 0.01%, Ni: 0.005%, S: 0.007%, and Se: 0.001% and having a balance comprised of Fe and impurities was hot rolled to obtain thickness 2.3 mm hot rolled steel sheet.

Next, the hot rolled steel sheet was annealed under temperature conditions of heating at 1000°C for 1 minute.

After the annealing, the steel sheet was cold rolled to obtain thickness 0.23 mm cold rolled steel sheet. Next, this cold rolled steel sheet was annealed for decarburization under temperature conditions of heating at 800°C for 2 minutes, then an annealing separator containing magnesia (MgO) as its main constituent was coated on the surface of the cold rolled steel sheet.

Next, the cold rolled steel sheet on which the annealing separator was coated was finish annealed under temperature conditions of heating at 1200°C for 20 hours. As a result, steel sheet having the above-mentioned chemical composition, controlled in crystal orientation so that the axis of easy magnetization of the crystal grains and rolling direction matched, and having a glass coating formed on its surface was obtained.

Next, the surface of the steel sheet was lasered to form at least one of grooves or strain on the surface of the steel sheet.

For the lasering apparatus, a fiber laser made by IPG was used. The lasering conditions were adjusted to give a laser output of 1800W, a laser scan speed of 50 m/s, and a laser scan pitch (pitch PL) of 3 mm. The focused spot size of the portion where the beam size of the laser beam in the steel sheet rolling direction became the maximum was 40 µm and the focused spot size of the laser beam in the sheet width direction was adjusted to give the beam shape ratio shown in Table 1 (long size of semiellipse in rear/size of semicircle in front). Linear grooves of widths "w" of about 50 µm and depths D of about 20 µm were formed at a 3 mm pitch in a direction orthogonal to the rolling direction. However, for No. 5, the laser output was adjusted to 300W. Further, for Nos. 6 to 9, the depths of the grooves were changed by changing the laser scan speeds.

The residual stress due to the strain introduced in the vicinities of the grooves formed was measured using the above-mentioned measurement method. The measurement results are shown in Table 1 together with the core loss W17/50. It should be noted that the residual stress was measured without removing the glass coating while the shape of the grooves (depth of the grooves) was measured after removing the glass coating.

### [Evaluation of Magnetic Properties]

A width 60 mm x length 300 mm specimen including a sheet width center position of grain-oriented electrical steel sheet of each test no. was taken. The length of the specimen was parallel to the rolling direction.

Using this specimen, the magnetic flux density (T) was found by the single sheet magnetic property test (SST test) based on JIS C2256 (2011). Specifically, the specimen was subjected to a 800A/m magnetic field to find the magnetic flux density (T).

Further, using the above specimen, the core loss W_{1 7 / 5 0}(W/kg) when the frequency was 50Hz and the maximum flux density was 1.7T was measured based on JIS C2256 (2011).

**[Table 1]**

| No. | | Depth of grooves (µm) | Beam shape ratio (rear/ front) | Maximum value of residual stress due to wall surface compressive strain (MPa) | Area ratio of region with residual stress of 10 MPa or more (%) | Maximum value of residual stress due to bottom surface tensile strain (MPa) | Area ratio of region with residual stress of 10 MPa or more (%) | Core loss W17/50 (W/kg) | Magnetic flux density (T) | |
|---|---|---|---|---|---|---|---|---|---|---|
| 1 | Only grooves | 20 | 1 | 0 | 0 | 0 | 0 | 0.75 | 1.90 | Comp, ex. |
| 2 | Grooves + strain | 20 | 4 | 9 | 8 | 6 | 6 | 0.74 | 1.90 | Comp, ex. |
| 3 | Grooves + strain | 20 | 5 | 11 | 12 | 10 | 10 | 0.72 | 1.90 | Inv. ex. |
| 4 | Grooves + strain | 20 | 10 | 25 | 20 | 18 | 18 | 0.72 | 1.90 | Inv. ex. |
| 5 | Only strain | 0 | 1 | - | - | - | - | 0.74 | 1.92 | Comp, ex. |
| 6 | Grooves + strain | 45 | 5 | 11 | 20 | 10 | 15 | 0.74 | 1.85 | Comp, ex. |
| 7 | Grooves + strain | 40 | 5 | 11 | 18 | 10 | 13 | 0.72 | 1.87 | Inv. ex. |
| 8 | Grooves + strain | 10 | 5 | 11 | 10 | 10 | 10 | 0.72 | 1.91 | Inv. ex. |
| 9 | Grooves + strain | 8 | 5 | 11 | 8 | 10 | 10 | 0.74 | 1.91 | Comp, ex. |

From these results, it is learned that in electrical steel sheet with residual stress present due to grooves and strain in their vicinities according to embodiments of the present invention, the core loss is reduced further than the comparative examples.

## Claims

1. Grain-oriented electrical steel sheet having a steel sheet surface on which grooves extending in a direction crossing a rolling direction and with a groove depth direction comprised of a sheet thickness direction are formed and having residual stress due to strain remaining in the vicinities of the grooves,
in which grain-oriented electrical steel sheet,
a pitch in the steel sheet rolling direction of the grooves is 2 to 10 mm,
a depth of the grooves is 10 µm or more and 40 µm or less and a width of the grooves is 10 µm or more and 200 µm or less.
in a range of within 10 µm from a wall surface of the groove, where a surface of the groove present at a depth of 25 to 75% of the depth of the groove is defined as the "wall surface", to the steel sheet rolling direction, a region in which 10 MPa or more residual stress is present due to compressive strain in the steel sheet rolling direction is 10 area% or more.
in a range of within 10 µm from a bottom surface of the groove, where a surface of the groove present at a depth of 75 to 100% of the depth of the groove is defined as the "bottom surface", to the sheet thickness direction, a region in which 10 MPa or more residual stress is present due to tensile strain in the steel sheet rolling direction is 10 area% or more.
